# EUROPEAN PATENT APPLICATION

(11) **EP 4 575 823 A1**
(43) Date of publication of application: **25.06.2025**
(21) Application number: 23862005.8
(22) Date of filing: 28.06.2023
(51) Int. Cl.: G06F 16/245

(54) **METHOD AND SYSTEM FOR ACQUIRING NODE STATE INFORMATION, AND RELATED APPARATUS**

(30) Priority: 07.09.2022 CN 202211089805
(71) Applicant: Huawei Cloud Computing Technologies Co., Ltd., Guiyang, Guizhou 550025 (CN)
(72) Inventor: ZHANG, Lei, Guiyang, Guizhou 550025 (CN); ZHANG, Wenliang, Guiyang, Guizhou 550025 (CN); LV, Jinquan, Guiyang, Guizhou 550025 (CN)
(74) Representative: Epping - Hermann - Fischer
(86) International application number: PCT/CN2023/103435
(87) International publication number: WO 2024/051304

(57) **Abstract**

This application discloses a method and a system for obtaining node state information, and a related apparatus, and belongs to the field of database technologies. In this method, a computing node and a management node use a low latency of RDMA, and node state information is obtained by executing an SQL statement, to avoid a network latency and CPU overheads caused by a TCP/IP-based heartbeat detection solution. That is, in this solution, a communication latency caused by a TCP/IP protocol can be avoided, less resources of a CPU of a management node are consumed, usage of the CPU can be reduced, and efficiency of obtaining node state information can also be improved.

## Description

This application claims priority to Chinese Patent Application No. 202211089805.9, filed on September 7, 2022 and entitled "METHOD AND SYSTEM FOR OBTAINING NODE STATE INFORMATION AND RELATED APPARATUS", which is incorporated herein by reference in its entirety.

### TECHNICAL FIELD

This application relates to the field of database technologies, and in particular, to a method and a system for obtaining node state information, and a related apparatus.

### BACKGROUND

A distributed database system usually includes a management node, a plurality of computing nodes, and a plurality of storage nodes. The computing node is responsible for processing data and storing a processing result on the storage node. The management node is responsible for managing and maintaining the plurality of computing nodes, for example, obtaining state information of each computing node, and properly scheduling a computing node based on the state information of the computing node, to improve overall system performance and ensure data processing reliability.

The state information of the computing node usually includes a fault situation. If the management node does not detect a fault of the computing node in time, data processing of the system is affected, which is critical for an on-line transaction processing (on-line transaction processing, OLTP) system. In a related technology, a heartbeat detection solution based on the transmission control protocol/internet protocol (transmission control protocol/Internet protocol, TCP/IP) is used to detect a fault of the computing node. That is, the computing node periodically sends a heartbeat packet to the management node, and the management node detects, based on the received heartbeat packet, whether the computing node is faulty.

However, congestion control and the like of the TCP/IP protocol lead to a long communication latency between nodes. In addition, overheads of processing a heartbeat packet by a central processing unit (central processing unit, CPU) of the management node are high, and detection time is long. Usually, it takes more than 10 seconds or even dozens of seconds to detect a fault, and detection efficiency is low.

### SUMMARY

This application provides a method and a system for obtaining node state information, and a related apparatus, to reduce CPU overheads and usage, and improve efficiency of obtaining node state information. The technical solutions are as follows:
According to a first aspect, a method for obtaining node state information is provided. A distributed database system includes a first management node and a plurality of computing nodes, and the method includes:
The first management node writes at least one structured query language (structure query language, SQL) statement into a first remote direct memory access (remote direct memory access, RDMA) memory. The first computing node periodically obtains the at least one SQL statement from the first RDMA memory, where the first computing node is any computing node in the plurality of computing nodes. The first computing node executes the at least one SQL statement each time the at least one SQL statement is obtained, to obtain an execution result, where the execution result includes state information of the first computing node. The first computing node writes the execution result into a second RDMA memory by performing a one-sided RDMA write operation, where the second RDMA memory is an RDMA memory in the first management node.

In this solution, the computing node and the management node use a low latency of RDMA, and node state information is obtained by executing the SQL statement, to avoid a network latency and CPU overheads caused by a TCP/IP-based heartbeat detection solution. That is, in this solution, a communication latency caused by a TCP/IP protocol can be avoided, less resources of a CPU of a management node are consumed, usage of the CPU can be reduced, and efficiency of obtaining node state information can also be improved.

In an implementation, the first RDMA memory is an RDMA memory in the first management node. That a first computing node periodically obtains the at least one SQL statement from the first RDMA memory includes: The first computing node reads the at least one SQL statement from the first RDMA memory by periodically performing a one-sided RDMA read operation. A CPU of the first management node is unaware of the RDMA read operation of the first computing node, reducing occupation of the CPU of the first management node. A low latency of RDMA is used, reducing a communication latency between nodes, and further improving efficiency of obtaining node state information.

Optionally, the method further includes: The first computing node sends a registration request to the first management node. The first management node receives the registration request. The first management node sends a registration response to the first computing node based on the registration request, where the registration response carries an address of the first RDMA memory and an address of the second RDMA memory. The first computing node receives the registration response. The address of the first RDMA memory is an obtaining location of the SQL statement, and the address of the second RDMA memory is a write-back location of the state information. The write-back location of the state information is a write-back location of the execution result of the SQL statement. It should be understood that, in a registration process of the computing node, the management node feeds back the obtaining location of the SQL statement and the write-back location of the execution result to the computing node.

To shorten a length of the at least one SQL statement, further speed up read/write of the at least one SQL statement, and reduce a network bandwidth occupied when the first computing node reads the at least one SQL statement from the first RDMA memory in the first management node, optionally, the first management node encodes the at least one SQL statement, to obtain an encoded SQL statement. The at least one SQL statement written by the first management node into the first RDMA memory is the encoded SQL statement. That is, the at least one SQL statement is an encoded SQL statement.

Optionally, the method further includes: The first management node periodically updates at least one to-be-encoded SQL statement. The first management node sets a value of a check bit in a process of updating and encoding the at least one to-be-encoded SQL statement.

In a process of updating the at least one to-be-encoded SQL statement, the first management node changes a value of a check bit in the encoded SQL statement in the first RDMA memory to an unspecified value. The unspecified value indicates that the encoded SQL statement in the first RDMA memory is invalid. After updating and encoding the at least one to-be-encoded SQL statement to obtain an updated encoded SQL statement, the first management node writes the updated encoded SQL statement into the first RDMA memory. A value of a check bit in the updated encoded SQL statement is a specified value, and the specified value indicates that the updated encoded SQL statement is valid. In simple terms, the value of the check bit in the encoded SQL statement is set to indicate whether the encoded SQL statement is complete and valid, so that the computing node does not execute an invalid SQL statement.

The method further includes: The first computing node extracts the value of the check bit in the encoded SQL statement each time the encoded SQL statement is obtained, and the first computing node executes the encoded SQL statement when the value of the check bit is the specified value.

Optionally, the at least one SQL statement is a plurality of SQL statements, the state information includes a plurality of types of state data, and the plurality of types of state data are in one-to-one correspondence with the plurality of SQL statements. The plurality of types of state data represent at least two of a node activity, a clock service state, a storage read service state, and a storage write service state of the first computing node.

Optionally, the distributed database system provides a configuration interface, the configuration interface provides a plurality of SQL statement combination manners and/or an SQL statement customization module, and different SQL statement combinations correspond to node state detection of different strengths. The method further includes: The first management node receives a configuration parameter submitted by a user through the configuration interface. The first management node determines the at least one SQL statement based on the configuration parameter.

It should be understood that, this solution supports obtaining different state data of a computing node by using different SQL statements, and different SQL statement combinations can be used for node state detection of different strengths on the computing node.

Optionally, that the first computing node executes the at least one SQL statement to obtain an execution result includes: If it is not the first time that the first computing node obtains the at least one SQL statement, the first computing node obtains executable code of the at least one SQL statement. The first computing node executes the executable code, to obtain the execution result.

The executable code is obtained by processing the at least one SQL statement after the first computing node obtains the at least one SQL statement for the first time. For example, the first computing node processes the at least one SQL statement by using precoding and code generation technologies, to obtain the executable code of the at least one SQL statement. It should be understood that all code execution logic of the SQL statement includes processes of permission check, syntax analysis, query optimization, query execution, and the like, and execution of all the code execution logic consumes a lot of resources of a CPU of the computing node. However, in this solution, by using the pre-compilation and code generation technologies, the first computing node does not execute all code execution logic for the at least one SQL statement when it is not the first time for obtaining the at least one SQL statement, so that execution time of the SQL statement is shortened to a millisecond level. That is, execution efficiency is improved, and less resources of the CPU of the first computing node can be occupied.

In another implementation, the first RDMA memory is an RDMA memory in the first computing node. That the first management node writes at least one SQL statement into a first RDMA memory includes: The first management node writes the at least one SQL statement into the first RDMA memory by performing a one-sided RDMA write operation. It should be understood that, an implementation of presetting the at least one SQL statement in the first computing node can reduce network-based interaction between the first computing node and the first management node, to improve efficiency of obtaining the SQL statement.

Optionally, the state information of the first computing node includes a first timestamp, and the first timestamp indicates system time at which the first computing node obtains the execution result. The method further includes: The first management node determines a time difference between the system time indicated by the first timestamp and current system time of the first management node. If the time difference exceeds a time difference threshold, the first management node determines that the first computing node is faulty.

Time precision of system time of each node in the distributed database system is ensured by a global clock service, and the time precision does not exceed a precision threshold. It should be understood that timestamp-based node fault detection is implemented by using a high-precision global clock service.

Optionally, the distributed database system further includes a second management node. The method further includes: If the at least one SQL statement fails to be read or the execution result fails to be written, the first computing node reads at least one SQL statement from a third RDMA memory by performing a one-sided RDMA read operation, where the third RDMA memory is an RDMA memory in the second management node. The first computing node executes the at least one SQL statement read from the third RDMA memory, to obtain an execution result. The first computing node writes the execution result into a fourth RDMA memory by performing a one-sided RDMA write operation, where the fourth RDMA memory is an RDMA memory in the second management node. It should be understood that the second management node and the first management node are master and standby management nodes. In this solution, the computing node does not need to report state information to both the master node and the standby node.

Optionally, the at least one SQL statement includes a master/standby identifier. That the first computing node executes the at least one SQL statement read from the third RDMA memory includes: When determining, based on the master/standby identifier in the at least one SQL statement read from the third RDMA memory, that the second management node is a master node, the first computing node executes the at least one SQL statement read from the third RDMA memory. That is, the first computing node determines, based on the master/standby identifier in the at least one SQL statement read from the third RDMA memory, whether the second management node is the master node; and when determining that the second management node is the master node, the first computing node executes the at least one SQL statement read from the third RDMA memory.

It should be understood that, a reason why the first computing node fails to read the at least one SQL statement from the first RDMA memory in the first management node or fails to write the execution result into the second RDMA memory may be that master/standby switching occurs, or the first computing node is faulty, or a link between the first computing node and the first management node is faulty. Based on this, when determining, based on the master/standby identifier, that the master/standby switching actually occurs, the first computing node executes an SQL statement read from a new master node.

According to a second aspect, a distributed database system is provided. The system is configured to implement the method for obtaining node state information according to the first aspect. The system includes a first management node and a plurality of computing nodes.

The first management node is configured to write at least one SQL statement into a first RDMA memory.

A first computing node is configured to periodically obtain the at least one SQL statement from the first RDMA memory, execute the at least one SQL statement each time the at least one SQL statement is obtained, to obtain an execution result, and write the execution result into a second RDMA memory by performing a one-sided RDMA write operation. The execution result includes state information of the first computing node, the second RDMA memory is an RDMA memory in the first management node, and the first computing node is any computing node in the plurality of computing nodes.

Optionally, the first RDMA memory is an RDMA memory in the first management node.

The first computing node is configured to read the at least one SQL statement from the first RDMA memory by periodically performing a one-sided RDMA read operation.

Optionally, the first computing node is further configured to: send a registration request to the first management node, and receive a registration response from the first management node. The registration response carries an address of the first RDMA memory and an address of the second RDMA memory.

The first management node is further configured to: receive the registration request from the first computing node, and send the registration response to the first computing node based on the registration request.

Optionally, the at least one SQL statement is an encoded SQL statement. The first computing node is further configured to: extract a value of a check bit in the encoded SQL statement each time the encoded SQL statement is obtained, and execute the encoded SQL statement when the value of the check bit is a specified value.

Optionally, the first management node is further configured to: periodically update at least one to-be-encoded SQL statement, and set a value of a check bit in a process of updating and encoding the at least one to-be-encoded SQL statement.

The first management node is specifically configured to: in a process of updating the at least one to-be-encoded SQL statement, change the value of the check bit in the encoded SQL statement in the first RDMA memory to an unspecified value, where the unspecified value indicates that the encoded SQL statement in the first RDMA memory is invalid; and after updating and encoding the at least one to-be-encoded SQL statement to obtain an updated encoded SQL statement, write the updated encoded SQL statement into the first RDMA memory, where a value of a check bit in the updated encoded SQL statement is the specified value, and the specified value indicates that the updated encoded SQL statement is valid.

Optionally, the distributed database system further includes a second management node.

The first computing node is further configured to: if the at least one SQL statement fails to be read or the execution result fails to be written, read at least one SQL statement from a third RDMA memory by performing a one-sided RDMA read operation, execute the at least one SQL statement read from the third RDMA memory, to obtain an execution result, and write the execution result into a fourth RDMA memory by performing a one-sided RDMA write operation, where the third RDMA memory and the fourth RDMA memory are RDMA memories in the second management node.

Optionally, the at least one SQL statement includes a master/standby identifier.

The first computing node is specifically configured to: when determining, based on the master/standby identifier in the at least one SQL statement read from the third RDMA memory, that the second management node is a master node, execute the at least one SQL statement read from the third RDMA memory.

Optionally, the first RDMA memory is an RDMA memory in the first computing node.

The first management node is specifically configured to write the at least one SQL statement into the first RDMA memory by performing a one-sided RDMA write operation.

Optionally, the first computing node is specifically configured to: if it is not the first time that the first computing node obtains the at least one SQL statement, obtain executable code of the at least one SQL statement, and execute the executable code to obtain the execution result.

The executable code is obtained by processing the at least one SQL statement after the first computing node obtains the at least one SQL statement for the first time.

Optionally, the state information of the first computing node includes a first timestamp, and the first timestamp indicates system time at which the first computing node obtains the execution result.

The first management node is further configured to: determine a time difference between the system time indicated by the first timestamp and current system time of the first management node, and if the time difference exceeds a time difference threshold, determine that the first computing node is faulty.

Time precision of system time of each node in the distributed database system is ensured by a global clock service, and the time precision does not exceed a precision threshold.

Optionally, the at least one SQL statement is a plurality of SQL statements, the state information of the first computing node includes a plurality of types of state data, and the plurality of types of state data are in one-to-one correspondence with the plurality of SQL statements. The plurality of types of state data represent at least two of a node activity, a clock service state, a storage read service state, and a storage write service state of the first computing node.

Optionally, the distributed database system provides a configuration interface, the configuration interface provides a plurality of SQL statement combination manners and/or an SQL statement customization module, and different SQL statement combinations correspond to node state detection of different strengths.

The first management node is further configured to: receive a configuration parameter submitted by a user through the configuration interface, and determine the at least one SQL statement based on the configuration parameter.

According to a third aspect, a computing device cluster is provided. The computer cluster includes a plurality of computing devices, each computing device includes a processor and a memory, and the processors of the plurality of computing devices are configured to execute instructions stored in the memories of the plurality of computing devices, to enable the computing device cluster performs the method for obtaining node state information according to the first aspect. Each computing device may further include a communication bus. The communication bus is configured to establish a connection between the processor and the memory of each computing device, and may be further configured to establish a connection to another computing device.

According to a fourth aspect, a computer-readable storage medium is provided. The computer-readable storage medium stores instructions, that is, a computer program. When the instructions are run in a computer device cluster, the computer device cluster is enabled to perform the method for obtaining node state information according to the first aspect.

According to a fifth aspect, a computer program product including instructions is provided. When the computer program product runs in a computer device cluster, the computer device cluster is enabled to perform the method for obtaining node state information according to the first aspect.

Technical effects achieved in the second aspect, the third aspect, the fourth aspect, and the fifth aspect are similar to those achieved by corresponding technical means in the first aspect. Details are not described herein again.

### BRIEF DESCRIPTION OF DRAWINGS

FIG. 1 is a diagram of an architecture of a distributed database system according to an embodiment of this application;
FIG. 2 is a diagram of an architecture of another distributed database system according to an embodiment of this application;
FIG. 3 is a diagram of a structure of a computing device according to an embodiment of this application;
FIG. 4 is a diagram of an architecture of a computing device cluster according to an embodiment of this application;
FIG. 5 is a diagram of a connection between computing devices according to an embodiment of this application;
FIG. 6 is a flowchart of a method for obtaining node state information according to an embodiment of this application;
FIG. 7 is a flowchart of another method for obtaining node state information according to an embodiment of this application;
FIG. 8 is a flowchart of interaction between a management node and a computing node according to an embodiment of this application;
FIG. 9 is a processing flowchart of a management node according to an embodiment of this application;
FIG. 10 is a flowchart of still another method for obtaining node state information according to an embodiment of this application;
FIG. 11 is another flowchart of interaction between a management node and a computing node according to an embodiment of this application;
FIG. 12 is a schematic of a structure of a computing node according to an embodiment of this application; and
FIG. 13 is a diagram of a structure of a management node according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, some nouns and terms in embodiments of this application are first described.

RDMA (remote direct memory access): An RDMA technology is generated to resolve a latency of data processing during network transmission. A device can directly access an RDMA memory of another device according to an RDMA protocol, that is, access the memory of the device by bypassing a CPU of the another device. The CPU of the another device does not interfere with the access process. The RDMA technology reduces unnecessary frequent data processing and transmission in the CPU, reduces a network latency in an interaction process, and improves work efficiency.

SQL (structured query language): The SQL is a database query and programming design language used to access data and query, update, and manage a related database system.

The following describes a distributed database system in embodiments of this application.

A system architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the system architecture and the emergence of new service scenarios, the technical solutions provided in embodiments of this application are also applicable to similar technical problems.

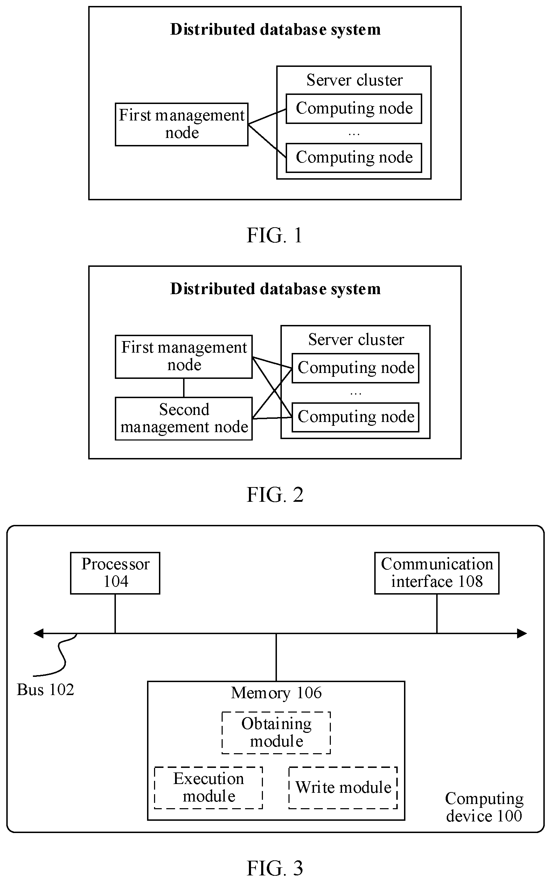

FIG. 1 is a diagram of an architecture of a distributed database system according to an embodiment of this application. The system includes a first management node and a server cluster, and the server cluster includes a plurality of computing nodes. A communication connection is established between the management node and each of the plurality of computing nodes.

The management node is configured to obtain state information of each computing node by using a method for obtaining node state information provided in embodiments of this application. The plurality of computing nodes are configured to feed back state information to the first management node by using the method for obtaining node state information provided in embodiments of this application.

Optionally, as shown in FIG. 2, the system further includes a second management node. A communication connection is also established between the second management node and each of the plurality of computing nodes. The first management node and the second management node are master and standby management nodes in the system. The second management node is configured to: when the second management node is switched to a master node, obtain the state information of each computing node by using the method for obtaining node state information provided in embodiments of this application.

The system further includes a plurality of storage nodes (not shown in FIG. 1 and FIG. 2). Communication connections are established between each computing node and some storage nodes in the plurality of storage nodes, and different computing nodes are connected to different storage nodes. The computing node is further configured to process data, and store a processing result on the storage node.

Both the management node and the computing node in FIG. 1 and FIG. 2 may be implemented by using software, or may be implemented by using hardware. For example, the following describes an implementation of the computing node. Similarly, for an implementation of the management node, refer to an implementation of the computing node.

A module is used as an example of a software functional unit, and the computing node may include code (an application) running on a computing instance. The computing instance may be at least one of computing devices such as a physical host, a virtual machine, and a container. Further, there may be one or more computing devices. For example, the computing node may include code run on a plurality of hosts/virtual machines/containers. It should be noted that, the plurality of hosts/virtual machines/containers configured to run the code may be distributed in a same region (region), or may be distributed in different regions. The plurality of hosts/virtual machines/containers used to run the code may be distributed in a same available zone (available zone, AZ), or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region and cross-region communication between VPCs in different regions. VPCs are interconnected through the communication gateway.

A module is used as an example of a hardware functional unit, and the computing node may include at least one computing device such as a server. Alternatively, the computing node may be a device or the like implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof.

A plurality of computing devices included in the computing node may be distributed in a same region, or may be distributed in different regions. The plurality of computing devices included in the computing node may be distributed in a same AZ, or may be distributed in different AZs. Similarly, the plurality of computing devices included in the computing node may be distributed in a same VPC, or may be distributed in a plurality of VPCs. The plurality of computing devices may be any combination of computing devices such as a server, an ASIC, a PLD, a CPLD, an FPGA, and GAL.

An embodiment of this application further provides a computing device 100. The computing device 100 may become a part or all of the management node, or a part or all of the computing node. As shown in FIG. 3, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus 102 may be classified into an address bus, a data bus, a control bus, and the like. For ease of representation, only one line is used to represent the bus in FIG. 3, but this does not mean that there is only one bus or only one type of bus. The bus 104 may include a path for transmitting information between components (for example, the memory 106, the processor 104, and the communication interface 108) of the computing device 100.

The processor 104 may include any one or more of processors such as a central processing unit (CPU), a graphics processing unit (graphics processing unit, GPU), a microprocessor (microprocessor, MP), a digital signal processor (digital signal processor, DSP), and an integrated circuit. The integrated circuit is, for example, an ASIC, a PLD, or a combination thereof. Optionally, the PLD is a CPLD, an FPGA, GAL, or any combination thereof.

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid state drive (solid state drive, SSD), or any other medium that can be used to carry or store expected program code in a form of instructions or a data structure and that can be accessed by a computer, but is not limited thereto. The memory 106 exists independently, and is connected to the processor 104 through the bus 102, or the memory 106 is integrated with the processor 104.

The memory 106 stores executable program code, and the processor 104 executes the executable program code to separately implement functions of the management node and the computing node, so as to implement the method for obtaining node state information provided in embodiments of this application. That is, the memory 106 stores instructions for performing the method for obtaining node state information.

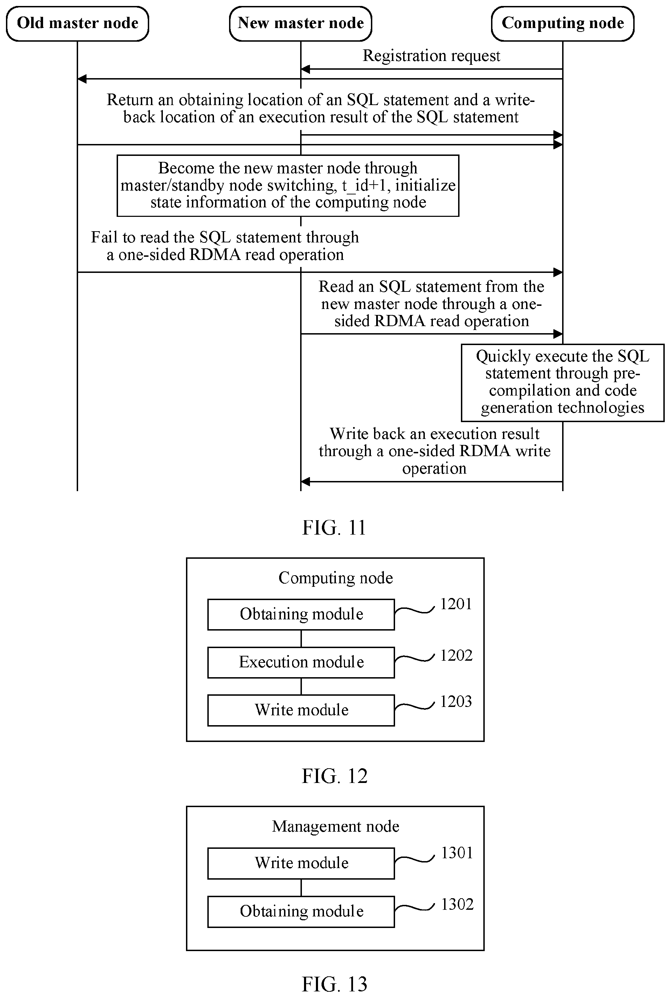

For example, the memory 106 stores executable program code, and the processor 104 executes the executable program code to separately implement functions of an obtaining module, an execution module, and a write module in a computing node shown in FIG. 12 and functions of a write module and an obtaining module in a management node shown in FIG. 13, to implement the method for obtaining node state information provided in embodiments of this application.

The communication interface 103 uses, for example but not limited to, a network interface card, or a transceiver module such as a transceiver, to implement communication between the computing device 100 and another device or a communication network. The network interface includes a wired communication interface, or includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

An embodiment of this application further provides a computing device cluster. The computing device cluster includes a plurality of computing devices. The computing device may be a server, for example, a central server, an edge server, or a local server in a local data center. In some embodiments, the computing device may alternatively be a terminal device, for example, a desktop computer, a notebook computer, or a smartphone.

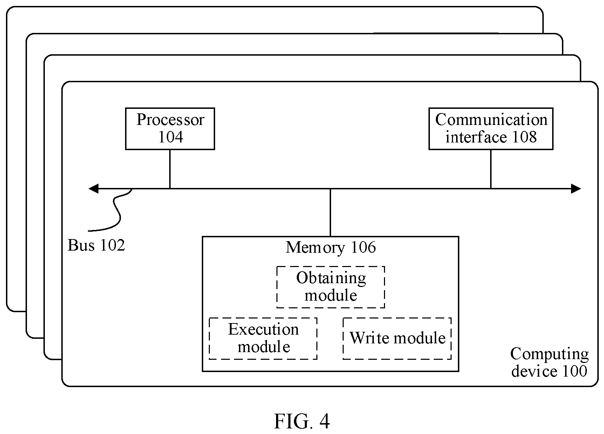

As shown in FIG. 4, the computing device cluster includes the plurality of computing devices 100. The memories 106 in the plurality of computing devices 100 in the computing device cluster may store same instructions used to perform the foregoing method for obtaining node state information.

In some possible implementations, the memories 106 in the plurality of computing devices 100 in the computing device cluster each may alternatively store a part of instructions used to perform the foregoing method for obtaining node state information. In other words, a combination of the plurality of computing devices 100 may jointly execute all instructions used to perform the foregoing method for obtaining node state information. For example, the plurality of computing devices 100 include a management node and a plurality of computing nodes. The memories 106 of the management node and the computing nodes each store a part of instructions used to perform the foregoing method for obtaining node state information. A combination of the management node and the plurality of computing nodes can jointly execute all the instructions of the foregoing method for obtaining node state information.

It should be noted that, memories 106 in different computing devices 100 in the computing device cluster may store different instructions, which are respectively used to perform a part of functions of the computing nodes or the management node. In other words, the instructions stored in the memories 106 in the different computing devices 100 may implement a function of a part or all of modules included in the computing nodes or the management node.

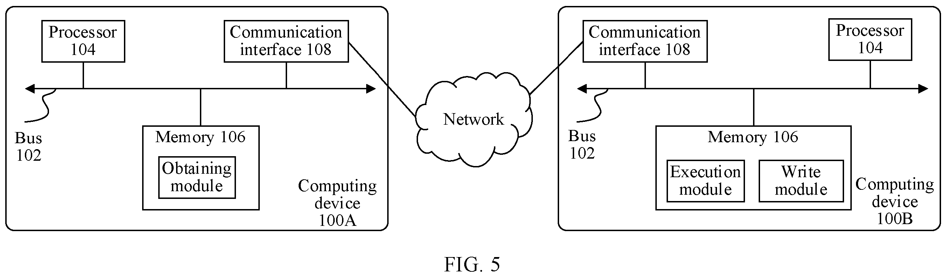

In some possible implementations, the one or more computing devices in the computing device cluster may be connected through a network. The network may be a wide area network, a local area network, or the like. FIG. 5 shows a possible implementation. As shown in FIG. 5, two computing devices 100A and 100B are connected through a network. Specifically, each computing device is connected to the network through a communication interface of the computing device. In this type of possible implementation, a memory 106 in the computing device 100A stores instructions for performing functions of a part of modules included in a computing node or a management node. In addition, a memory 106 in the computing device 100B stores instructions for performing functions of the other part of modules included in the computing node or the management node.

For example, the memory 106 in the computing device 100A stores instructions for performing a function of an obtaining module included in the computing node. In addition, the memory 106 in the computing device 100B stores instructions for performing functions of an execution module and a write module included in the computing node.

It should be understood that functions of the computing device 100A shown in FIG. 5 may alternatively be completed by a plurality of computing devices 100. Likewise, functions of the computing device 100B may be alternatively completed by a plurality of computing devices 100.

The following describes a method for obtaining node state information according to embodiments of this application.

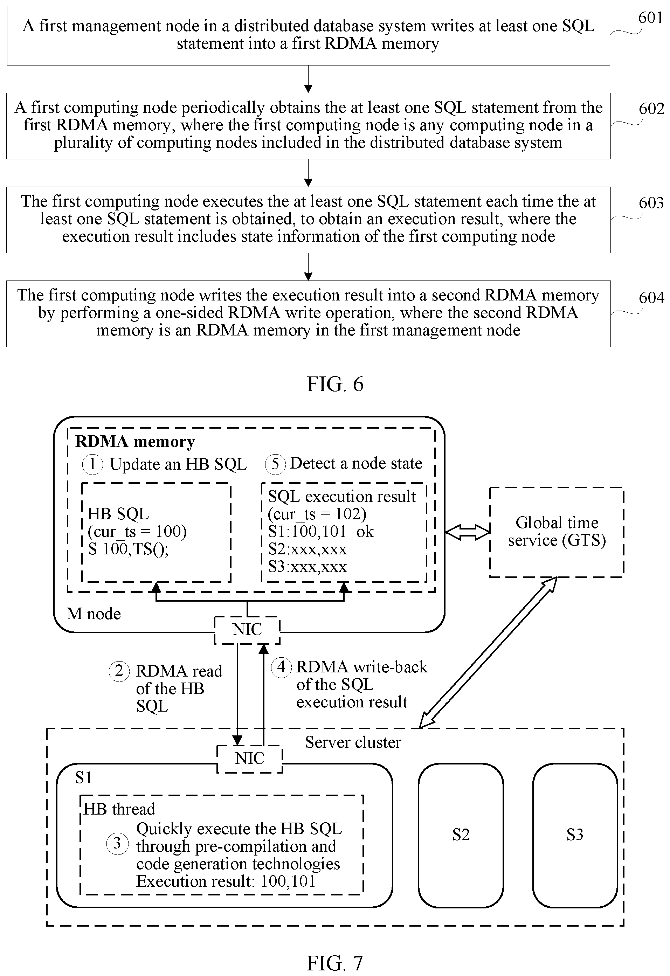

FIG. 6 is a flowchart of a method for obtaining node state information according to an embodiment of this application. The method is applied to a distributed database system. As shown in FIG. 6, the method includes the following steps.

**Step 601:** A first management node in the distributed database system writes at least one SQL statement into a first RDMA memory.

It can be learned from the foregoing that the distributed database system includes one management node, or includes master and standby management nodes. In an embodiment in which the system includes one management node, the management node is the first management node. In an embodiment in which the system includes master and standby management nodes, one management node serves as a master node, and the other management node serves as a standby node. The two management nodes include the first management node and a second management node. In step 601, the first management node is the master node.

To reduce a latency in obtaining node state information, and reduce occupation of a CPU of the first management node, that is, consume less resources of the CPU, the method for obtaining node state information provided in this embodiment of this application is implemented based on an RDMA memory and a one-sided RDMA read/write operation, and a computing node feeds back state information of the computing node to the management node by executing an SQL statement. That is, the node state information is obtained by using a low latency of RDMA without a factor such as congestion control of the TCP/IP protocol that affects a latency, and without intervention of the CPU.

In an implementation, the first management node has an RDMA memory. The first management node writes the at least one SQL statement into the first RDMA memory, and the first RDMA memory is an RDMA memory in the first management node. That is, the first management node writes the at least one SQL statement into the RDMA memory in the first management node.

In another implementation, the first management node writes the at least one SQL statement into a first RDMA memory in a first computing node by performing a one-sided RDMA write operation. That is, the first RDMA memory is an RDMA memory in the first computing node, and the first management node presets the at least one SQL statement in the first computing node. The first computing node is any computing node in the plurality of computing nodes included in the distributed database system. It should be understood that, for each computing node other than the first computing node in the plurality of computing nodes, the first management node can write the at least one SQL statement into an RDMA memory in each of the other computing nodes by performing a one-sided RDMA write operation.

To shorten a length of the at least one SQL statement, further speed up read/write of the at least one SQL statement, and reduce a network bandwidth occupied when the first computing node reads the at least one SQL statement from the first RDMA memory in the first management node, optionally, the first management node encodes the at least one SQL statement, to obtain an encoded SQL statement. The at least one SQL statement written by the first management node into the first RDMA memory is the encoded SQL statement. An encoding method used by the first management node to encode the SQL statement is not limited in this embodiment of this application.

In this embodiment of this application, the first management node can further update the at least one SQL statement, for example, update a timestamp of the at least one SQL statement. That is, the at least one SQL statement further includes a reference timestamp, and the reference timestamp indicates system time at which the first management node updates the at least one SQL statement. Optionally, the first management node periodically updates at least one to-be-encoded SQL statement.

In a process of updating and encoding the at least one to-be-encoded SQL statement, the first management node sets a value of a check bit. In a process of updating the at least one to-be-encoded SQL statement, the first management node changes a value of a check bit in the encoded SQL statement in the first RDMA memory to an unspecified value. The unspecified value indicates that the encoded SQL statement in the first RDMA memory is invalid. After updating and encoding the at least one to-be-encoded SQL statement to obtain an updated encoded SQL statement, the first management node writes the updated encoded SQL statement into the first RDMA memory. A value of a check bit in the updated encoded SQL statement is a specified value, and the specified value indicates that the updated encoded SQL statement is valid. In simple terms, the value of the check bit in the encoded SQL statement is set to indicate whether the encoded SQL statement is complete and valid, so that the computing node does not execute an invalid SQL statement.

If the at least one SQL statement is a plurality of SQL statements, the first management node separately encodes the plurality of SQL statements to obtain a plurality of encoded SQL statements. Each encoded SQL statement includes a check bit, and a value of the check bit in each encoded SQL statement is the specified value. Alternatively, the plurality of encoded SQLs include one check bit, that is, share one check bit, and a value of the check bit is the specified value. In addition, the check bit may be the first 8 bytes of the encoded SQL statement, or may be the first 4 bytes of the encoded SQL statement, or may be the first byte of the encoded SQL statement, or may be bytes of another length at another location in the encoded SQL statement.

For example, the check bit is the first 8 bytes of the encoded SQL statement. If a length of the encoded SQL statement does not exceed 8 bytes, the first management node does not set the check bit in the encoded SQL statement.

In addition to a case in which the first management node can change the value of the check bit in a process of periodically updating the at least one to-be-encoded SQL statement and encoding the at least one SQL statement, the value of the check bit in the encoded SQL statement may also be set in another case. For example, in a process in which a user selects or edits an SQL statement through a configuration interface, the value of the check bit in the encoded SQL statement is set to the unspecified value. After the user submits a configuration parameter through the configuration interface, and the first management node determines, based on the configuration parameter, an SQL statement selected and encoded by the user as the at least one SQL statement, and encodes the at least one SQL statement, a value of a check bit in an encoded SQL statement is set to the specified value. For detailed descriptions about the configuration interface, refer to the following related content.

Optionally, the at least one SQL statement is a plurality of SQL statements, the state information that needs to be obtained by the first management node includes a plurality of types of state data, and the plurality of types of state data are in one-to-one correspondence with the plurality of SQL statements. The plurality of types of state data of the first computing node represent at least two of a node activity, a clock service state, a storage read service state, and a storage write service state of the first computing node.

For example, the at least one SQL statement includes a first SQL statement, a second SQL statement, and a third SQL statement, and the three SQL statements sequentially correspond to the node activity, the clock service state, and the storage write service state of the computing node. To be specifically, the first SQL statement is used to obtain the node activity of the computing node. The second SQL statement is used to obtain the clock service state of the computing node. The third SQL statement is used to obtain the storage write service state of the computing node. Both the node activity and the clock service state may be used for fault detection on the computing node.

In an example, the first SQL statement is 'SELECT 1'. The second SQL statement is 'SELECT timestamp()'. The third SQL statement is 'UPDATE heartbeat SET ts=timestamp()'.

It should be understood that the node activity and the clock service state of the computing node are an activity and a clock service state of the computing node. A storage read service and a storage write service of the computing node are a storage read capability and a storage write capability of a storage node corresponding to the computing node. That is, a storage read state and a storage write state respectively represent whether the storage read capability and the storage write capability of the storage node are normal.

The at least one SQL statement may be set by default in the system. For example, the at least one SQL statement is set by default in the first management node. The at least one SQL statement may also be customized by a user (for example, an administrator). It should be understood that, in an implementation in which the distributed database system supports customized configuration of an SQL statement, regardless of whether the system has an SQL statement by default, the user may perform customized configuration.

In an implementation in which customized configuration of an SQL statement is supported, the distributed database system provides a configuration interface. The configuration interface provides a plurality of SQL statement combination manners and/or an SQL statement customization module, and different SQL statement combinations correspond to node state detection of different strengths. An SQL statement included in each SQL statement combination is an SQL statement provided by the system by default. The user may select an SQL statement on the configuration interface by operating a client according to a type of state data that needs to be obtained, and/or compile the SQL statement through the customization module.

For example, the configuration interface displays a plurality of SQL statements and notations that are in one-to-one correspondence with the plurality of SQL statements. The notation represents a purpose of the corresponding SQL statement, that is, describes state data corresponding to the SQL statement. The user may select SQL based on the notations as required. The customization module may also be displayed on the configuration interface. The user may select to edit an SQL statement in the customization module. After the SQL statement is selected and/or edited, the user operates the client to submit the selected and/or edited SQL statement. That is, the user submits the configuration parameter through the configuration interface, and the configuration parameter indicates the SQL statement selected and/or edited by the user. The configuration interface includes a graphical sub-interface and/or a command line sub-interface. The graphical sub-interface displays the plurality of SQL statements and the notations of the plurality of SQL statements, and the command line sub-interface is the customization module.

Correspondingly, the first management node receives the configuration parameter submitted by the user through the configuration interface. The first management node determines the at least one SQL statement based on the configuration parameter. The at least one SQL statement includes the SQL statement selected and/or edited by the user.

It can be learned from the foregoing that, this embodiment of this application supports obtaining different state data of a computing node by using different SQL statements, and different SQL statement combinations can be used for node state detection of different strengths on the computing node.

**Step 602:** The first computing node periodically obtains the at least one SQL statement from the first RDMA memory, where the first computing node is any computing node in the plurality of computing nodes included in the distributed database system.

To obtain state information of the first computing node in real time, the first computing node periodically obtains the at least one SQL statement from the first RDMA memory.

In an implementation in which the first RDMA memory is an RDMA memory in the first management node, the first computing node reads the at least one SQL statement from the first RDMA memory by periodically performing a one-sided RDMA read operation. The CPU of the first management node is unaware of the RDMA read operation of the first computing node, reducing occupation of the CPU of the first management node. A low latency of RDMA is used, reducing a communication latency between nodes, and further improving efficiency of obtaining node state information.

Periodicity duration for which the first computing node periodically performs the one-sided RDMA read operation is equal to preset duration. The preset duration is duration configured by the system by default or duration customized by the user. Optionally, the periodicity duration is 1 millisecond (ms), 2 ms, or another value. Shorter periodicity duration indicates higher efficiency of detecting a computing node in an abnormal state by the first management node.

In this implementation, in a process in which the first computing node registers with the first management node, the first management node feeds back an obtaining location of the SQL statement and a write-back location of the state information to the first computing node. To be specific, the first computing node sends a registration request to the first management node, the first management node receives the registration request, and the first management node sends a registration response to the first computing node based on the registration request. The registration response carries an address of the first RDMA memory and an address of a second RDMA memory. The first computing node receives the registration response. The address of the first RDMA memory is the obtaining location of the SQL statement, and the address of the second RDMA memory is the write-back location of the state information. The write-back location of the state information is a write-back location of an execution result of the SQL statement. Based on this, the first computing node reads the at least one SQL statement from the first RDMA memory based on the address of the first RDMA memory by periodically performing the one-sided RDMA read operation.

The registration request carries an identifier of the first computing node. After receiving the registration request, the first management node stores the identifier of the first computing node, to indicate that the first computing node is successfully registered, is in a normal state, and can work normally. When the first computing node is faulty, the first management node deletes the identifier of the first computing node.

Alternatively, after receiving the registration request, the first management node stores the identifier of the first computing node in correspondence with a first state identifier. When the first computing node is faulty, the first management node modifies the first state identifier to a second state identifier. The first state identifier indicates that a corresponding computing node is in a normal state, and the second state identifier indicates that a corresponding computing node is in an abnormal state.

In an implementation in which the first RDMA memory is an RDMA memory in the first computing node, the first computing node periodically obtains the at least one SQL statement from the first RDMA memory in the first computing node. It should be understood that, an implementation of presetting the at least one SQL statement in the first computing node can reduce network-based interaction between the first computing node and the first management node, to improve efficiency of obtaining the SQL statement.

In addition, in this implementation, in a process in which the first computing node registers with the first management node, the first management node feeds back a write-back location of the state information to the first computing node. To be specific, the first computing node sends a registration request to the first management node, the first management node receives the registration request, and the first management node sends a registration response to the first computing node based on the registration request. The registration response carries an address of a second RDMA memory. The first computing node receives the registration response. The address of the second RDMA memory is the write-back location of the state information. The write-back location of the state information is a write-back location of an execution result of the SQL statement.

**Step 603:** The first computing node executes the at least one SQL statement each time the at least one SQL statement is obtained, to obtain an execution result, where the execution result includes the state information of the first computing node.

The first computing node periodically obtains the at least one SQL statement from the first RDMA memory, and executes each SQL statement included in the at least one SQL statement each time the at least one SQL statement is obtained, to obtain an execution result. The execution node includes state data corresponding to each SQL statement.

In an implementation, the at least one SQL statement is an encoded SQL statement. Based on this, the first computing node decodes the encoded SQL statement to obtain at least one decoded SQL statement, and the first computing node executes the at least one decoded SQL statement.

It can be learned from the foregoing descriptions that the state information of the first computing node includes a plurality of types of state data, and the plurality of types of state data represent at least two of the node activity, the clock service state, the storage read service state, and the storage write service state of the first computing node.

For example, the at least one SQL statement includes the first SQL statement, the second SQL statement, and the third SQL statement that are described above. The first SQL statement is 'SELECT 1', the second SQL statement is 'SELECT timestamp()', and the third SQL statement is "UPDATE heartbeat SET ts=timestamp()'. The first computing node executes the first SQL statement, to obtain state data that represents the node activity of the first computing node. The first computing node executes the second SQL statement, to obtain a first timestamp. The first timestamp indicates current system time of the first computing node, that is, system time at which the execution result is obtained. The first timestamp represents the clock service state of the first computing node. The first computing node executes the third SQL statement, to obtain state data that represents a storage write service state of a storage node corresponding to the first computing node.

An implementation process in which the first computing node executes the third SQL statement includes: The first computing node performs a write operation on the storage node corresponding to the first computing node. If a storage write capability of the storage node corresponding to the first computing node is normal, the storage node corresponding to the first computing node feeds back first indication information to the first computing node. The first indication information indicates that the storage write capability of the storage node corresponding to the first computing node is normal. If the storage write capability of the storage node corresponding to the first computing node is abnormal, the storage node corresponding to the first computing node feeds back second indication information to the first computing node, or does not feed back information. The second indication information indicates that the storage write capability of the storage node corresponding to the first computing node is abnormal. If the first computing node receives the first indication information, the first computing node determines that the storage write capability of the storage node corresponding to the first computing node is normal. If the first computing node receives the second indication information or receives no information fed back by the storage node, the first computing node determines that the storage write capability of the storage node corresponding to the first computing node is abnormal.

If the at least one SQL statement includes a fourth SQL statement, and the fourth SQL statement corresponds to the storage read service state of the computing node, that is, the fourth SQL statement is used to obtain the storage read service of the computing node, the first computing node executes the fourth SQL statement, to obtain state data that represents a storage read service state of the storage node corresponding to the first computing node. An implementation process in which the first computing node executes the fourth SQL statement to obtain the state data of the storage read service state of the storage node corresponding to the first computing node is similar to an implementation process in which the first computing node executes the third SQL statement to obtain the state data of the storage write service state of the storage node corresponding to the first computing node. A main difference lies in that, executing the third SQL statement by the first computing node is performing a write operation on the storage node, and executing the fourth SQL statement is performing a read operation on the storage node.

It can be learned from the foregoing that, in an implementation, the at least one SQL statement obtained by the first computing node is the encoded SQL statement, and the encoded SQL statement includes a check bit. Based on this, the first computing node extracts the value of the check bit in the encoded SQL statement each time the encoded SQL statement is obtained, and the first computing node executes the encoded SQL statement when the value of the check bit is the specified value. That is, when the encoded SQL statement is valid, the first computing node executes the encoded SQL statement, to ensure validity of an execution result.

If the at least one SQL statement is a plurality of SQL statements, and each encoded SQL statement includes a check bit, the first computing node extracts a value of the check bit in each encoded SQL statement. If values of check bits in a part of the plurality of encoded SQL statements are the specified value, and values of check bits in the other part of SQL statements are the unspecified value, the first computing node executes an SQL statement including a check bit with a value equal to the specified value in the plurality of encoded SQL statements, and does not execute an SQL statement including a check bit with a value equal to the unspecified value. If values of check bits in the plurality of encoded SQL statements are all the unspecified value, the first computing node obtains a plurality of encoded SQL statements from the first RDMA memory again. Alternatively, if a value of a check bit in an SQL statement in the plurality of encoded SQL statements is a non-execution value, the first computing node obtains a plurality of encoded SQL statements from the first RDMA memory again. If values of the check bits in the plurality of encoded SQL statements are all the specified value, the first computing node executes the plurality of encoded SQL statements.

If the at least one SQL statement is a plurality of SQL statements, and the plurality of encoded SQL statements include one check bit, the first computing node extracts a value of the check bit in the plurality of encoded SQL statements. The first computing node executes the encoded SQL statements when the value of the check bit is the specified value. When the value of the check bit is the unspecified value, the first computing node obtains a plurality of encoded SQL statements from the first RDMA memory again.

In this embodiment of this application, the first computing node decodes the encoded SQL statement, to obtain at least one decoded SQL statement. The first computing node executes the at least one decoded SQL statement.

To shorten execution time of the at least one SQL statement and improve execution efficiency, if it is not the first time that the first computing node obtains the at least one SQL statement, the first computing node obtains executable code of the at least one SQL statement, and executes the executable code, to obtain the execution result. The executable code is obtained by the first computing node by processing the at least one SQL statement after the first computing node obtains the at least one SQL statement for the first time, or is obtained in another manner.

For example, the first computing node processes the at least one SQL statement by using precoding and code generation technologies, to obtain the executable code of the at least one SQL statement. It should be understood that all code execution logic of the SQL statement includes processes of permission check, syntax analysis, query optimization, query execution, and the like, and execution of all the code execution logic consumes a lot of resources of a CPU of the computing node. However, in this solution, by using the pre-compilation and code generation technologies, the first computing node does not execute all code execution logic for the at least one SQL statement when it is not the first time for obtaining the at least one SQL statement, so that execution time of the SQL statement is shortened to a millisecond level. That is, execution efficiency is improved, and less resources of the CPU of the first computing node can be occupied.

**Step 604:** The first computing node writes the execution result into the second RDMA memory by performing a one-sided RDMA write operation, where the second RDMA memory is an RDMA memory in the first management node.

When obtaining the execution result of the at least one SQL statement, the first computing node writes the execution result into the second RDMA memory of the first management node by performing the one-sided RDMA write operation.

It can be learned from the foregoing that, after the first computing node sends the registration request to the first management node, the first management node feeds back the address of the second RDMA memory to the first computing node by sending the registration response. Based on this, the first computing node writes the execution result into the second RDMA memory based on the address of the second RDMA memory by performing the one-sided RDMA write operation.

To implement fast node fault detection based on a high-precision global clock service (global time service, GTS), in this embodiment of this application, time precision of system time of each node in the distributed database system is ensured by the global clock service. The time precision does not exceed a precision threshold. The state information of the first computing node includes the first timestamp, and the first timestamp indicates the system time at which the first computing node obtains the execution result. After obtaining the execution result, the first management node determines a time difference between the system time indicated by the first timestamp and current system time of the first management node. If the time difference exceeds a time difference threshold, the first management node determines that the first computing node is faulty. If the time difference does not exceed the time difference threshold, the first management node determines that the first computing node is not faulty.

The time difference threshold may be N times the precision threshold, and N is greater than 1. For example, the precision threshold is 100 microseconds (µs), or is less than 100 µs, or is another smaller value. The time difference threshold is 300 µs, 500 µs, or another value.

Optionally, when the at least one SQL statement includes a reference timestamp, the execution result further includes the reference timestamp. The reference timestamp indicates system time at which the first management node updates the at least one SQL statement. The first management node determines time validity of the execution result based on the reference timestamp and the first timestamp included in the execution result. If the time difference between the system time indicated by the first timestamp and the system time indicated by the reference timestamp exceeds a time validity threshold, the first management node determines that the time validity of the execution result does not meet a condition. That is, the time validity is poor. If the time difference between the system time indicated by the first timestamp and the system time indicated by the reference timestamp does not exceed the time validity threshold, the first management node determines that the execution result meets the time validity condition. That is, the time validity is high.

It can be learned from the foregoing descriptions that the state information of the first computing node includes a plurality of types of state data, and the plurality of types of state data represent at least two of the node activity, the clock service state, the storage read service state, and the storage write service state of the first computing node. The first timestamp can represent the clock service state of the first computing node. After obtaining the plurality of types of state data, the first management node determines the node activity, the clock service state, the storage read service state, and the storage write service state of the first computing node based on the plurality of types of state data. Optionally, the first management node properly schedules the computing node based on the node activity, the clock service state, the storage read service state, and the storage write service state of the first computing node, to improve overall system performance and ensure data processing reliability.

It can be learned from the foregoing that the distributed database system includes one management node, or includes the master and standby management nodes. In an embodiment in which the system includes one management node, the management node is the first management node, and the first management node obtains state information of each computing node in the system by using step 601 to step 604. In an embodiment in which the system includes the master and standby management nodes, that is, includes the first management node and the second management node, one of the first management node and the second management node serves as a master node, and the other serves as a standby node. The master node is configured to obtain the state information of each computing node in the system. When the first management node serves as the master node, the first management node obtains the state information of each computing node by using step 601 to step 604. If master/standby switching occurs, the master node (namely, the second management node) after the switching obtains the state information of each computing node. The following describes a method for obtaining node state information in a case of master/standby switching.

In an embodiment in which the distributed database system further includes the second management node, if the at least one SQL statement fails to be read or the execution result fails to be written, the first computing node reads at least one SQL statement from a third RDMA memory by performing a one-sided RDMA read operation. The third RDMA memory is an RDMA memory in the second management node. The first computing node executes the at least one SQL statement read from the third RDMA memory, to obtain an execution result. The first computing node writes the execution result into a fourth RDMA memory by performing a one-sided RDMA write operation. The fourth RDMA memory is an RDMA memory in the second management node.

It should be understood that, if the first computing node fails to read the at least one SQL statement from the first RDMA memory of the first management node or fails to write the execution result into the second RDMA memory, the first computing node determines that the master/standby switching occurs in the system, and the first computing node needs to obtain the at least one SQL statement from the master node (namely, the second management node) after the switching, and feed back the execution result to the second management node.

In addition to registering with the first management node, the first computing node further registers with the second management node. To be specific, the first computing node sends a registration request to the second management node, and after receiving the registration request, the second management node sends a registration response to the first computing node based on the registration request. The registration response carries an address of the third RDMA memory and an address of the fourth RDMA memory. Based on this, the first computing node reads the at least one SQL statement from the third RDMA memory based on the address of the third RDMA memory by performing the one-sided RDMA read operation. The first computing node writes the execution result into the fourth RDMA memory based on the address of the fourth RDMA memory by performing the one-sided RDMA write operation.

A reason why the first computing node fails to read the at least one SQL statement from the first RDMA memory in the first management node or fails to write the execution result into the second RDMA memory may be that the master/standby switching occurs, or the first computing node is faulty, or a link between the first computing node and the first management node is faulty. Therefore, to ensure that the first computing node feeds back the state information to the second management node when the master/standby switching occurs, in this embodiment of this application, the at least one SQL statement obtained by the first computing node includes the master/standby identifier, and the master/standby identifier indicates that the first management node or the second management node is the master node. The first computing node determines, based on the master/standby identifier in the at least one SQL statement read from the third RDMA memory, whether the second management node is the master node. When determining that the second management node is the master node, the first computing node executes the at least one SQL statement read from the third RDMA memory. That is, when determining, based on the master/standby identifier in the at least one SQL statement read from the third RDMA memory, that the second management node is the master node, the first computing node executes the at least one SQL statement read from the third RDMA memory.

The master/standby identifier is a first identifier or a second identifier, the first identifier indicates that a corresponding management node is the master node, and the second identifier indicates that a corresponding management node is the standby node. When the first management node is the master node, a master/standby identifier included in the at least one SQL statement in the first RDMA memory is the first identifier, and the master/standby identifier included in the at least one SQL statement in the third RDMA memory is the second identifier. When the second management node is the master node, the master/standby identifier included in the at least one SQL statement in the first RDMA memory is the second identifier, and the master/standby identifier included in the at least one SQL statement in the third RDMA memory is the first identifier. If the master/standby identifier included in the at least one SQL statement obtained by the first computing node from the third RDMA memory is the first identifier, the first computing node determines that the master/standby switching occurs. Optionally, the first identifier is '1', and the second identifier is '0'.

Alternatively, the master/standby identifier is a value (for example, term_id, t_id for short), and the value of the master/standby identifier is increased each time the master/standby switching occurs. If a value of the master/standby identifier included in the at least one SQL statement obtained by the first computing node from the third RDMA memory is greater than a value of the master/standby identifier included in the at least one SQL statement obtained from the first RDMA memory, the first computing node determines that the master/standby switching occurs. For example, at a first moment, the first management node is the master node, a value of the master/standby identifier included in the at least one SQL statement in the first RDMA memory is '100', and a value of the master/standby identifier included in the at least one SQL statement in the third RDMA memory is '99'. The master/standby switching occurs at a second moment, and a master node after the switching is the second management node. After the master/standby switching, a value of the master/standby identifier included in the at least one SQL statement in the first RDMA memory is '100', and a value of the master/standby identifier included in the at least one SQL statement in the third RDMA memory is '101'.

The foregoing content uses the first computing node in the plurality of computing nodes included in the distributed database system as an example to describe an implementation process in which the management node obtains the state information of the first computing node. An implementation process in which the management node obtains the state information of each computing node other than the first computing node in the plurality of computing nodes is similar to an implementation process in which the management node obtains the state information of the first computing node, and details are not described herein again.

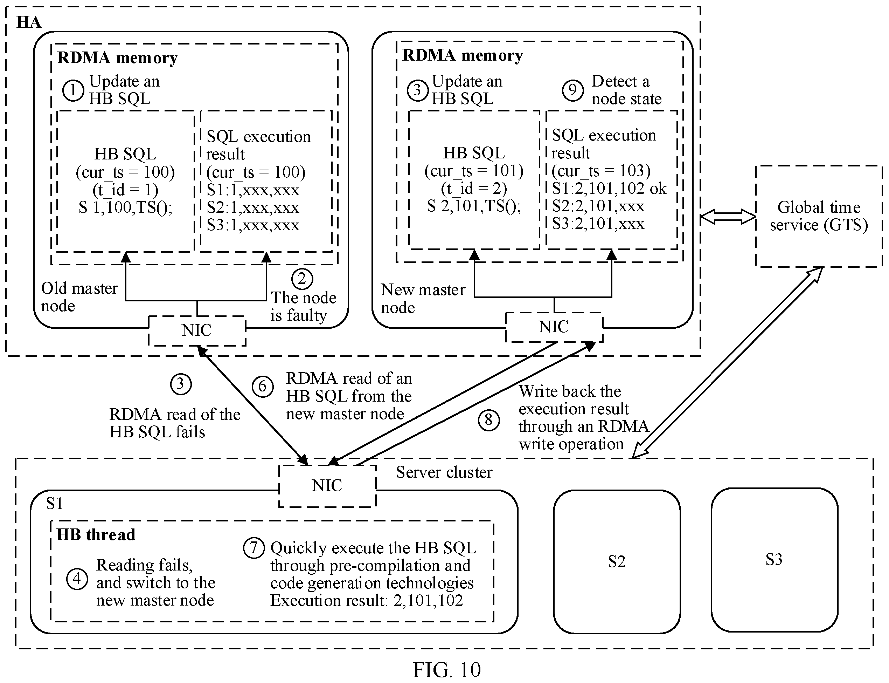

With reference to FIG. 7 to FIG. 11, the method for obtaining node state information provided in embodiments of this application is described again by using examples. A distributed database system in the embodiments in FIG. 7 to FIG. 9 includes one management node, and a distributed database system in the embodiments in FIG. 10 and FIG. 11 includes two management nodes. The two management nodes are master and standby management nodes.

FIG. 7 is a flowchart of another method for obtaining node state information according to an embodiment of this application. In FIG. 7, the management node is a master node (M node for short). The management node includes an RDMA memory and a network interface card (network interface card, NIC) that supports RDMA. A computing node is a server. A plurality of computing nodes in the system include a server 1, a server 2, and a server 3 (S1, S2, and S3 for short). The plurality of computing nodes form a server cluster (server cluster). Each computing node also includes a network interface card that supports RDMA. The management node interacts with the computing node through the network interface card. The method for obtaining node state information shown in FIG. 7 includes the following process.

701: A registration process of the computing node (not shown in FIG. 7).

The computing node in the server cluster sends a registration request to the management node. The management node sends, based on the received registration request, a registration response to the computing node that requests to register. The registration response carries an obtaining location of an SQL statement and a write-back location of an execution result of the SQL statement. The obtaining location of the SQL statement is an address of a first RDMA memory in the management node, and the write-back location of the execution result of the SQL statement is an address of a second RDMA memory in the management node.

702: A process of determining the SQL statement.

The management node writes at least one SQL statement that needs to be executed by the computing node into the first RDMA memory. In FIG. 7, the at least one SQL statement is referred to as a heartbeat (heartbeat, HB) SQL.

The management node updates the at least one SQL statement, and writes at least one updated SQL statement into the first RDMA memory. The at least one SQL statement includes a reference timestamp. After periodically updating the reference timestamp in the at least one SQL statement, the management node writes the at least one SQL statement into the first RDMA memory. The reference timestamp indicates system time at which the management node updates the at least one SQL statement. For example, the at least one SQL statement includes 'select current_ts timestamp()' ('S cur_ts TS()' for short). In the SQL statement, 'current_ts (cur_ts for short)' indicates the reference timestamp, and the management node periodically updates a value of 'current_ts'. To implement millisecond-level node state detection, time precision of system time of each node in the distributed database system is ensured by a global clock service. For example, the time precision does not exceed 100 µs.

To reduce a network bandwidth occupied for sending the SQL statement, after encoding the at least one SQL statement, the management node writes an encoded SQL statement into the first RDMA memory. To ensure effective execution of the SQL statement, that is, to ensure atomicity of the SQL statement, the encoded SQL statement includes a check bit. After the management node obtains the encoded SQL statement through encoding, a value of the check bit is set to a specified value. When the management node updates the SQL statement, the value of the check bit is set to an unspecified value.

703: A process in which the computing node obtains the SQL statement, executes the SQL statement, and writes back the execution result.

The computing node obtains the encoded SQL statement in the first RDMA memory based on the address of the first RDMA memory by periodically performing a one-sided RDMA read operation. The computing node may implement steps in the process by running a heartbeat thread (HB thread).

If the encoded SQL statement includes a check bit, the computing node extracts the check bit in the encoded SQL statement. If a value of the check bit is the specified value, the computing node executes the at least one SQL statement, to obtain the execution result. To shorten execution time of the SQL statement, the computing node quickly executes the at least one SQL statement by using precoding and code generation technologies, to obtain the execution result. For example, the execution result includes 'master_ts, server_ts', for example, '100,101', where 'master_ts' is a reference timestamp, 'server_ts' is a first timestamp, and the first timestamp indicates system time at which the computing node obtains the execution result. The computing node writes the execution result into the second RDMA memory based on the address of the second RDMA memory by performing a one-sided RDMA write operation.

If the value of the check bit is the unspecified value, the computing node obtains an encoded SQL statement in the first RDMA memory again by performing the one-sided RDMA read operation.

704: A process in which the management node determines, based on the execution result, whether each computing node is abnormal.

The management node periodically traverses the execution result written by each computing node into the second RDMA memory. The management node determines, based on the execution result written back by each computing node, whether each computing node is abnormal. For example, the execution result includes the first timestamp. For an execution result written back by any computing node, if a time difference between the first timestamp included in the execution result written back by the computing node and current system time of the management node does not exceed a time difference threshold, the management node determines that the computing node is not faulty. If a time difference between the first timestamp included in the execution result written back by the computing node and the current system time of the management node exceeds the time difference threshold, the management node determines that the computing node is faulty.

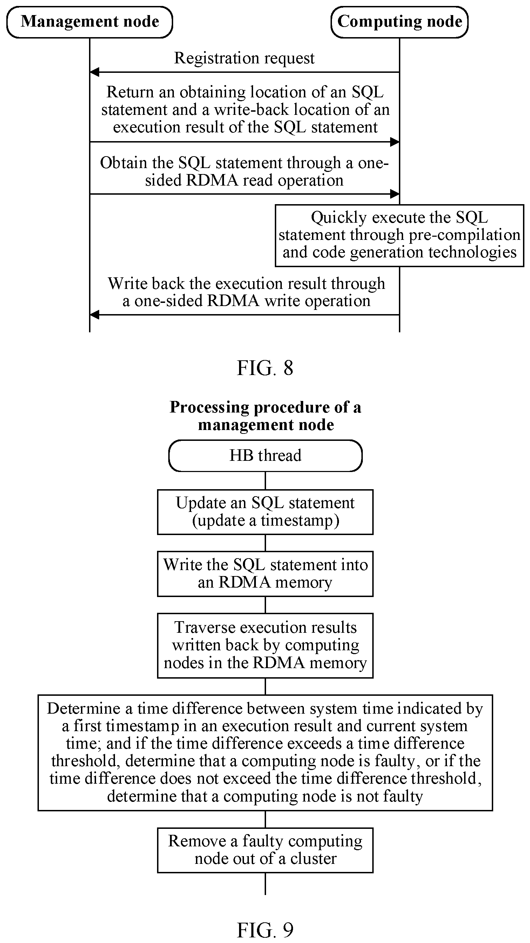

FIG. 8 is a flowchart of interaction between a management node and a computing node according to an embodiment of this application. The interaction process is briefly described herein. The computing node sends a registration request to the management node. The management node returns an obtaining location of an SQL statement and a write-back location of an execution result of the SQL statement to the computing node. The computing node obtains the SQL statement from an RDMA memory in the management node by periodically performing a one-sided RDMA read operation. The computing node skips processes such as permission check and syntax analysis of the SQL statement by using pre-compilation and code generation technologies, and quickly executes executable code of the SQL statement, to obtain the execution result. The computing node writes the execution result back to the RDMA memory in the management node by performing a one-sided RDMA write operation.

FIG. 9 is a processing flowchart of a management node according to an embodiment of this application. Refer to FIG. 9. The management node obtains state information of a computing node by running a heartbeat thread (HB thread). That is, the management node performs the following steps through the heartbeat thread: updating an SQL statement, including updating a reference timestamp in the SQL statement; writing an updated SQL statement into an RDMA memory; traversing an execution result written back by each computing node in the RDMA memory; determining a time difference between system time indicated by a first timestamp in the execution result and current system time of the management node; if the time difference exceeds a time difference threshold, determining that the computing node is faulty, or if the time difference does not exceed the time difference threshold, determining that the computing node is not faulty; and removing the faulty computing node from the cluster, for example, deleting an identifier of the faulty computing node, or modifying a state identifier of the faulty computing node to an identifier indicating an abnormal state.

FIG. 10 is a flowchart of still another method for obtaining node state information according to an embodiment of this application. A difference between FIG. 10 and FIG. 7 lies in that a distributed database system shown in FIG. 10 is a high availability (high availability, HA) system, and the system includes master and standby management nodes, that is, includes a first management node and a second management node. Before master/standby switching occurs, the first management node is the master node. After the master/standby switching occurs, the second management node is the master node. In FIG. 10, an old master node and a new master node respectively represent master nodes before and after the master/standby switching. The method for obtaining node state information shown in FIG. 10 includes the following process.

1001: A registration process of a computing node.

The computing node in a server cluster sends registration requests to the first management node and the second management node. The first management node and the second management node send, based on the received registration requests, registration responses to the computing node that requests to register. The registration response sent by the first management node carries an address of a first RDMA memory and an address of a second RDMA memory. The registration response sent by the second management node carries an address of a third RDMA memory and an address of a fourth RDMA memory.

1002: A process of determining an SQL statement.

The first management node writes at least one SQL statement that needs to be executed by the computing node into the first RDMA memory. The second management node writes the at least one SQL statement that needs to be executed by the computing node into the third RDMA memory. A specific implementation process is consistent with a principle of the specific implementation process of 702 in the embodiment in FIG. 7, and details are not described herein again.

1003: A process in which before the master/standby switching, the computing node obtains the SQL statement from the first management node, executes the SQL statement, and writes an execution result back to the first management node.

The computing node obtains an encoded SQL statement in the first RDMA memory based on the address of the first RDMA memory by periodically performing a one-sided RDMA read operation, and executes the encoded SQL statement to obtain the execution result. The computing node writes the execution result into the second RDMA memory based on the address of the second RDMA memory by performing a one-sided RDMA write operation. A specific implementation process is consistent with a principle of the specific implementation process of 703 in the embodiment in FIG. 7, and details are not described herein again.

1004: When the first management node is faulty, the second management node initializes state information of all computing nodes before switching to the master node.

1005: A process in which after the master/standby switching, the computing node obtains an SQL statement from a new active node (namely, the second management node), executes the SQL statement, and writes an execution result back to the second management node.

If the computing node fails to obtain the SQL statement from the first RDMA memory, or fails to write the execution result back to the second RDMA memory, the computing node obtains at least one SQL statement in the third RDMA memory based on the address of the third RDMA memory by performing a one-sided RDMA read operation.

If the at least one SQL statement includes a master/standby identifier (for example, t_id), when the master/standby identifier indicates that the second management node is the master node, the first computing node executes the at least one SQL statement obtained from the third RDMA memory, to obtain the execution result. The first computing node writes the execution result into the fourth RDMA memory based on the address of the fourth RDMA memory by performing a one-sided RDMA write operation.

1006: A process in which the new master node determines, based on the execution result, whether each computing node is abnormal. A specific implementation process is consistent with a principle of the specific implementation process of 704 in the embodiment in FIG. 7, and details are not described herein again.

FIG. 11 is another flowchart of interaction between a management node and a computing node according to an embodiment of this application. The interaction process is briefly described herein. The computing node sends registration requests to a first management node and a second management node, and the first management node and the second management node return respective obtaining locations of SQL statements and write-back locations of execution results of the SQL statements to the computing node. When the first management node is the master node, the computing node obtains the SQL statement from an RDMA memory in the first management node by periodically performing a one-sided RDMA read operation. When master/standby switching occurs, the second management node is switched to the master node, and updates a master/standby identifier of an SQL statement in an RDMA memory in the second management node to term_id+1. The second management node initializes state information of each computing node. The computing node fails to obtain the SQL statement from the RDMA memory in the first management node. Then, the computing node obtains the SQL statement from the RDMA memory in the second management node by performing a one-sided RDMA read operation. The computing node determines, based on term_id in the SQL statement, that the second management node is the master node, and executes the obtained SQL statement, to obtain an execution result. The computing node writes the execution result into the RDMA memory in the second management node by performing a one-sided RDMA write operation.

In some other embodiments, even if the distributed database system includes a management node, an additional detection node may be deployed in the distributed database system, and the detection node performs step 601 to step 604, to obtain state information of each computing node. However, in an embodiment in which the distributed database system does not include a management node, for example, in an embodiment of a massively parallel processing (massively parallel processing, MPP) database system, an additional detection node may also be deployed, to perform step 601 to step 604, so as to obtain state information of each computing node. An implementation process in which the detection node obtains the node state information is similar to an implementation process in which the management node obtains the node state information. Optionally, the distributed database system may include a first detection node and a second detection node. The two detection nodes are master and standby detection nodes. The first detection node can implement related operations of the first management node in the foregoing method for obtaining node state information, and the first detection node can implement related steps of the second management node in the foregoing method for obtaining node state information.

In conclusion, in embodiments of this application, the computing node and the management node use a low latency of RDMA, and node state information is obtained by executing the SQL statement, to avoid a network latency and CPU overheads caused by a TCP/IP-based heartbeat detection solution. That is, in this solution, a communication latency caused by a TCP/IP protocol can be avoided, less resources of a CPU of a management node are consumed, usage of the CPU can be reduced, and efficiency of obtaining node state information can also be improved.

In addition, a configuration interface provides a plurality of SQL statement combinations and/or a customized SQL statement, to implement node state detection in different scenarios and different strengths. A high-precision global clock is used to implement millisecond-level node fault detection based on timestamps. According to the precoding and code generation technologies, execution time of the SQL statement is shortened to a millisecond level. If the system includes the master and standby management nodes, the computing node only needs to report the state information to the master node, and does not need to report the state information to the standby node. With support of a high-precision global clock service and an RDMA network, node fault detection is hardly affected when master/standby switching occurs.

FIG. 12 is a schematic of a structure of a computing node according to an embodiment of this application. The computing node is a first computing node in a plurality of computing nodes included in a distributed database system, and the system further includes a first management node. Refer to FIG. 12. The computing node includes an obtaining module 1201, an execution module 1202, and a write module 1203.

The obtaining module 1201 is configured to obtain at least one SQL statement from a first RDMA memory.

The execution module 1202 is configured to execute the at least one SQL statement each time the at least one SQL statement is obtained, to obtain an execution result. The execution result includes state information of the first computing node.

The write module 1203 is configured to write the execution result into a second RDMA memory by performing a one-sided RDMA write operation. The second RDMA memory is an RDMA memory in the first management node.

Optionally, the first RDMA memory is an RDMA memory in the first management node.

The obtaining module 1201 includes:
a read submodule, configured to read, by the first computing node, the at least one SQL statement from the first RDMA memory by periodically performing a one-sided RDMA read operation.

Optionally, the first computing node further includes:
a sending module, configured to send a registration request to the first management node; and
a receiving module, configured to receive a registration response from the first management node, where the registration response carries an address of the first RDMA memory and an address of the second RDMA memory.

Optionally, the at least one SQL statement is an encoded SQL statement, and the first computing node further includes:
an extraction module, configured to extract a value of a check bit in the encoded SQL statement each time the encoded SQL statement is obtained.

The execution module 1202 is configured to execute the encoded SQL statement when the value of the check bit is a specified value.

Optionally, the distributed database system further includes a second management node, and the first computing node further includes:
a read module, configured to: if the at least one SQL statement fails to be read or the execution result fails to be written, read at least one SQL statement from a third RDMA memory by performing a one-sided RDMA read operation, where the third RDMA memory is an RDMA memory in the second management node.

The execution module 1202 is further configured to execute the at least one SQL statement read from the third RDMA memory, to obtain an execution result.

The write module 1203 is further configured to write the execution result into a fourth RDMA memory by performing a one-sided RDMA write operation, where the fourth RDMA memory is an RDMA memory in the second management node.

Optionally, the at least one SQL statement includes a master/standby identifier.

The execution module 1202 includes:
a determining submodule, configured to determine, based on the master/standby identifier in the at least one SQL statement read from the third RDMA memory, whether the second management node is a master node; and
an execution submodule, configured to: when it is determined that the second management node is the master node, execute the at least one SQL statement read from the third RDMA memory.

Optionally, the first RDMA memory is an RDMA memory in the first computing node.

Optionally, the execution module 1202 includes:
an obtaining submodule, configured to: if it is not the first time that the first computing node obtains the at least one SQL statement, obtain executable code of the at least one SQL statement; and
an execution submodule, configured to execute the executable code, to obtain the execution result.

Optionally, the executable code is obtained by processing the at least one SQL statement after the first computing node obtains the at least one SQL statement for the first time.

Optionally, the state information of the first computing node includes a first timestamp, and the first timestamp indicates system time at which the first computing node obtains the execution result.

Optionally, time precision of system time of each node in the distributed database system is ensured by a global clock service, and the time precision does not exceed a precision threshold.

Optionally, the at least one SQL statement is a plurality of SQL statements, the state information of the first computing node includes a plurality of types of state data, and the plurality of types of state data are in one-to-one correspondence with the plurality of SQL statements. The plurality of types of state data represent at least two of a node activity, a clock service state, a storage read service state, and a storage write service state of the first computing node.

Optionally, the distributed database system provides a configuration interface, the configuration interface provides a plurality of SQL statement combination manners and/or an SQL statement customization module, and different SQL statement combinations correspond to node state detection of different strengths.

In this embodiment of this application, the computing node and the management node use a low latency of RDMA, and node state information is obtained by executing the SQL statement, to avoid a network latency and CPU overheads caused by a TCP/IP-based heartbeat detection solution. That is, in this solution, less resources of a CPU of a management node can be consumed, usage of the CPU can be reduced, and efficiency of obtaining node state information can also be improved.

It should be noted that, when the computing node provided in the foregoing embodiment obtains node state information, division into the foregoing functional modules is merely used as an example for description. During actual application, the foregoing functions may be allocated to different functional modules for implementation based on a requirement. To be specific, an internal structure of the apparatus is divided into different functional modules, to implement all or a part of the functions described above. In addition, the computing node provided in the foregoing embodiment and the embodiment of the method for obtaining node state information belong to a same concept. For a specific implementation process of the computing node, refer to the method embodiment. Details are not described herein again.

FIG. 13 is a diagram of a structure of a management node according to an embodiment of this application. The management node is a first management node in a plurality of computing nodes included in a distributed database system, and the system further includes a plurality of computing nodes. Refer to FIG. 13. The first management node includes a write module 1301 and an obtaining module 1302.

The write module 1301 is configured to write at least one SQL statement into a first RDMA memory.

The obtaining module 1302 is configured to obtain an execution result of the at least one SQL statement in a second RDMA memory, where the second RDMA memory is an RDMA memory in the first management node, the execution result includes state information of a first computing node, and the first computing node is any computing node in the plurality of computing nodes.

Optionally, the first RDMA memory is an RDMA memory in the first management node, and the first management node further includes:
a first receiving module, configured to receive a registration request from the first computing node; and
a sending module, configured to send a registration response to the first computing node based on the registration request, where the registration response carries an address of the first RDMA memory and an address of the second RDMA memory.

Optionally, the at least one SQL statement is an encoded SQL statement, and the first management node further includes:
an update module, configured to periodically update at least one to-be-encoded SQL statement; and
a setting module, configured to set a value of a check bit in a process of updating and encoding the at least one to-be-encoded SQL statement.

The setting module is specifically configured to: in a process of updating the at least one to-be-encoded SQL statement, change a value of a check bit in the encoded SQL statement in the first RDMA memory to an unspecified value, where the unspecified value indicates that the encoded SQL statement in the first RDMA memory is invalid.

The setting module is further specifically configured to: after the at least one to-be-encoded SQL statement is updated and encoded to obtain an updated encoded SQL statement, write the updated encoded SQL statement into the first RDMA memory, where a value of a check bit in the updated encoded SQL statement is a specified value, and the specified value indicates that the updated encoded SQL statement is valid.

Optionally, the first RDMA memory is an RDMA memory in the first computing node.

The write module 1301 is specifically configured to:
write the at least one SQL statement into the first RDMA memory by performing a one-sided RDMA write operation.

Optionally, the state information of the first computing node includes a first timestamp, and the first timestamp indicates system time at which the first computing node obtains the execution result.

The first management node further includes:
a first determining module, configured to determine a time difference between the system time indicated by the first timestamp and current system time of the first management node; and
a second determining module, configured to: if the time difference exceeds a time difference threshold, determine that the first computing node is faulty.

Optionally, time precision of system time of each node in the distributed database system is ensured by a global clock service, and the time precision does not exceed a precision threshold.

Optionally, the at least one SQL statement is a plurality of SQL statements, the state information of the first computing node includes a plurality of types of state data, and the plurality of types of state data are in one-to-one correspondence with the plurality of SQL statements.

The plurality of types of state data represent at least two of a node activity, a clock service state, a storage read service state, and a storage write service state of the first computing node.

Optionally, the distributed database system provides a configuration interface, the configuration interface provides a plurality of SQL statement combination manners and/or an SQL statement customization module, and different SQL statement combinations correspond to node state detection of different strengths.

The first management node further includes:
a second receiving module, configured to receive a configuration parameter submitted by a user through the configuration interface; and
a third determining module, configured to determine the at least one SQL statement based on the configuration parameter.

In this embodiment of this application, the computing node and the management node use a low latency of RDMA, and node state information is obtained by executing the SQL statement, to avoid a network latency and CPU overheads caused by a TCP/IP-based heartbeat detection solution. That is, in this solution, less resources of a CPU of a management node can be consumed, usage of the CPU can be reduced, and efficiency of obtaining node state information can also be improved.

It should be noted that, when the management node provided in the foregoing embodiment obtains state information of a computing node, division into the foregoing functional modules is merely used as an example for description. During actual application, the foregoing functions may be allocated to different functional modules for implementation based on a requirement. To be specific, an internal structure of the apparatus is divided into different functional modules, to implement all or a part of the functions described above. In addition, the management node provided in the foregoing embodiment and the embodiment of the method for obtaining node state information belong to a same concept. For a specific implementation process of the management node, refer to the method embodiment. Details are not described herein again.

The obtaining module, the execution module, and the write module in the computing node shown in FIG. 12, and the write module and the obtaining module in the management node shown in FIG. 13 may be implemented by using software, or may be implemented by using hardware, or may be implemented by using a combination of software and hardware. The following uses the obtaining module in the computing node as an example to describe an implementation of the obtaining module. Similarly, for an implementation of the foregoing another module, refer to the implementation of the obtaining module.

A module is used as an example of a software functional unit, and the obtaining module may include code run on a computing instance. The computing instance may include at least one of a physical host, a virtual machine, and a container. Further, there may be one or more computing instances. For example, the obtaining module may include code run on a plurality of hosts/virtual machines/containers. It should be noted that the plurality of hosts/virtual machines/containers used to run the code may be distributed in a same region, or may be distributed in different regions. Further, the plurality of hosts/virtual machines/containers used to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same VPC, or may be distributed in a plurality of VPCs. Usually, one VPC is set in one region. A communication gateway needs to be set in each VPC for communication between two VPCs in a same region and cross-region communication between VPCs in different regions. VPCs are interconnected through the communication gateway.

A module is used as an example of a hardware functional unit, and the obtaining module may include at least one computing device such as a server. Alternatively, the obtaining module may be a device or the like implemented by using an ASIC or a PLD. The PLD may be implemented by a CPLD, an FPGA, GAL, or any combination thereof.

A plurality of computing devices included in the obtaining module may be distributed in a same region, or may be distributed in different regions. The plurality of computing devices included in the obtaining module may be distributed in a same AZ, or may be distributed in different AZs. Similarly, the plurality of computing devices included in the obtaining module may be distributed in a same VPC, or may be distributed in a plurality of VPCs. The plurality of computing devices may be any combination of computing devices such as a server, an ASIC, a PLD, a CPLD, an FPGA, and GAL.

In other embodiments, the obtaining module in the computing node may be configured to perform any step in the foregoing method for obtaining node state information, the execution module in the computing node may be configured to perform any step in the foregoing method for obtaining node state information, and the write module in the computing node may be configured to perform any step in the foregoing method for obtaining node state information. The steps implemented by the obtaining module, the execution module, and the write module in the computing node may be specified as required. The obtaining module, the execution module, and the write module in the computing node each implement different steps in the foregoing method for obtaining node state information, to implement all functions of the computing node.

An embodiment of this application further provides a computer program product including instructions. The computer program product may be software or a program product that includes instructions and that can run on a computing device or be stored in any usable medium. When the computer program product runs on a computing device included in a computer device cluster, the computer device cluster is enabled to perform the method for obtaining node state information provided in embodiments of this application.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct a computing device in a computer device cluster to perform the method for obtaining node state information provided in embodiments of this application.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium in embodiments of this application may be a non-volatile storage medium, that is, may be a non-transitory storage medium.

It should be understood that "at least one" in this specification refers to one or more, and "a plurality of" refers to two or more. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, user personal information, and the like), data (including but not limited to data used for analysis, stored data, displayed data, and the like), and signals in embodiments of this application are all authorized by a user or fully authorized by all parties, and collection, use, and processing of related data need to conform to related laws, regulations, and standards of related countries and regions.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the protection scope of the technical solutions of embodiments of this application.

## Claims

1. A method for obtaining node state information, wherein a distributed database system comprises a first management node and a plurality of computing nodes, and the method comprises:
Writing, by the first management node, at least one structured query language SQL statement into a first remote direct memory access RDMA memory;
periodically obtaining, by a first computing node, the at least one SQL statement from the first RDMA memory, wherein the first computing node is any computing node in the plurality of computing nodes;
executing, by the first computing node, the at least one SQL statement each time the at least one SQL statement is obtained, to obtain an execution result, wherein the execution result comprises state information of the first computing node; and
writing, by the first computing node, the execution result into a second RDMA memory by performing a one-sided RDMA write operation, wherein the second RDMA memory is an RDMA memory in the first management node.

2. The method according to claim 1, wherein the first RDMA memory is an RDMA memory in the first management node; and
the periodically obtaining, by a first computing node, the at least one SQL statement from the first RDMA memory comprises:
reading, by the first computing node, the at least one SQL statement from the first RDMA memory by periodically performing a one-sided RDMA read operation.

3. The method according to claim 2, wherein the method further comprises:
sending, by the first computing node, a registration request to the first management node; and
sending, by the first management node, a registration response to the first computing node based on the registration request, wherein the registration response carries an address of the first RDMA memory and an address of the second RDMA memory.

4. The method according to claim 2 or 3, wherein the at least one SQL statement is an encoded SQL statement, and the method further comprises:
extracting, by the first computing node, a value of a check bit in the encoded SQL statement each time the encoded SQL statement is obtained; and
executing, by the first computing node, the encoded SQL statement when the value of the check bit is a specified value.

5. The method according to any one of claims 2 to 4, wherein the distributed database system further comprises a second management node, and the method further comprises:
if the at least one SQL statement fails to be read or the execution result fails to be written, reading, by the first computing node, at least one SQL statement from a third RDMA memory by performing a one-sided RDMA read operation, wherein the third RDMA memory is an RDMA memory in the second management node;
executing, by the first computing node, the at least one SQL statement read from the third RDMA memory, to obtain an execution result; and
writing, by the first computing node, the execution result into a fourth RDMA memory by performing a one-sided RDMA write operation, wherein the fourth RDMA memory is an RDMA memory in the second management node.

6. The method according to claim 5, wherein the at least one SQL statement comprises a master/standby identifier; and
the executing, by the first computing node, the at least one SQL statement read from the third RDMA memory comprises:
when determining, based on the master/standby identifier in the at least one SQL statement read from the third RDMA memory, that the second management node is a master node, executing, by the first computing node, the at least one SQL statement read from the third RDMA memory.

7. The method according to claim 1, wherein the first RDMA memory is an RDMA memory in the first computing node; and
the writing, by the first management node, at least one structured query language SQL statement into a first remote direct memory access RDMA memory comprises:
writing, by the first management node, the at least one SQL statement into the first RDMA memory by performing a one-sided RDMA write operation.

8. The method according to any one of claims 1 to 7, wherein the executing, by the first computing node, the at least one SQL statement to obtain an execution result comprises:
if it is not the first time that the first computing node obtains the at least one SQL statement, obtaining, by the first computing node, executable code of the at least one SQL statement; and
executing, by the first computing node, the executable code, to obtain the execution result.

9. The method according to any one of claims 1 to 8, wherein the state information of the first computing node comprises a first timestamp, and the first timestamp indicates system time at which the first computing node obtains the execution result; and
the method further comprises:
determining, by the first management node, a time difference between the system time indicated by the first timestamp and current system time of the first management node; and
if the time difference exceeds a time difference threshold, determining, by the first management node, that the first computing node is faulty.

10. The method according to any one of claims 1 to 9, wherein the at least one SQL statement is a plurality of SQL statements, the state information comprises a plurality of types of state data, and the plurality of types of state data are in one-to-one correspondence with the plurality of SQL statements; and
the plurality of types of state data represent at least two of a node activity, a clock service state, a storage read service state, and a storage write service state of the first computing node.

11. The method according to any one of claims 1 to 10, wherein the distributed database system provides a configuration interface, the configuration interface provides a plurality of SQL statement combination manners and/or an SQL statement customization module, and different SQL statement combinations correspond to node state detection of different strengths; and
the method further comprises:
receiving, by the first management node, a configuration parameter submitted by a user through the configuration interface; and
determining, by the first management node, the at least one SQL statement based on the configuration parameter.

12. A distributed database system, wherein the system comprises a first management node and a plurality of computing nodes;
the first management node is configured to write at least one structured query language SQL statement into a first remote direct memory access RDMA memory; and
a first computing node is configured to periodically obtain the at least one SQL statement from the first RDMA memory, execute the at least one SQL statement each time the at least one SQL statement is obtained, to obtain an execution result, and write the execution result into a second RDMA memory by performing a one-sided RDMA write operation, wherein the execution result comprises state information of the first computing node, the second RDMA memory is an RDMA memory in the first management node, and the first computing node is any computing node in the plurality of computing nodes.

13. A computing device cluster, wherein the cluster comprises a plurality of computing devices, and each computing device comprises a processor and a memory; and
the processors of the plurality of computing devices are configured to execute instructions stored in the memories of the plurality of computing devices, to enable the computing device cluster to perform the method according to any one of claims 1 to 11.

14. A computer-readable storage medium, wherein the storage medium stores a computer program, and when the computer program is executed by a computer device cluster, steps of the method according to any one of claims 1 to 11 are implemented.

15. A computer program product, wherein the computer program product stores computer instructions, and when the computer instructions are executed by a computer device cluster, steps in the method according to any one of claims 1 to 11 are implemented.
